# EUROPEAN PATENT APPLICATION

(11) **EP 1 607 464 A1**
(43) Date of publication of application: **21.12.2005**
(21) Application number: 04253584.9
(22) Date of filing: 16.06.2004
(51) Int. Cl.: C09K 21/08, A62D 1/00

(54) **Dry powdered fire retardant composition for mixing with water on-site**

(71) Applicant: Santoro, Dario, Port Jefferson, New York (US); Shaw, Harry, Rockville, MD 20850 (US)
(72) Inventor: Santoro, Dario, Port Jefferson, New York (US); Shaw, Harry, Rockville, MD 20850 (US)
(74) Representative: Wolff, Francis Paul

(57) **Abstract**

A dry powdered fire retardant composition for mixing with water on-site comprising dry powdered guar in the range of approximately 40% to approximately 90% by weight and a dry powdered fire retardant salt in the range of approximately 10% to 60% by weight. The dry powdered guar is extremely hygroscopic for mixing on-site. The dry powdered fire retardant salt is a dry powdered mono-ammonium phosphate.

## Description

The present invention relates to a dry powdered fire retardant composition for mixing with water on-site.

Ignition of a flammable structure or other materials, such as trees downwind from a forest fire, brush fire, or another burning building is generally caused by wind-carried burning embers which fall on roofs or which strike a wall and fall to the ground next to the structure or otherwise make contact with it.

The main method of protecting a threatened building is to hose the roof of the building with water to wet any portion which may be exposed to ignition. Often, however, the water supply or pressure is inadequate or the temperature is so high and humidity so low that rapid drying occurs. Also, many flammable surfaces are relatively nonabsorbent so that they retain little water.

Forest fires and brush fires annually cause the loss of millions of dollars worth of timber and other property. Huge damage occurs because usually by the time the fire is detected and before control measures can be applied, it is out of control in a condition known as "wildfire." Not only is the direct property loss due to such fired catastrophic, but associated soil erosion and watershed problems are also significant. It is important, therefore, to minimize and control the spread of forest fires whenever possible.

A wide variety of fire retardant compositions which are used to prevent or combat the spread of wildfires (forest fires, range fires, etc.) have been proposed.

Generally, such compositions contain a fire retardant salt (*e.g.* ammonium phosphate - monobasic ammonium phosphate (MAP) and/or dibasic ammonium phosphate (DAP) -, ammonium polyphosphate, ammonium sulfate, and the like, an aqueous liquid vehicle, and various functional additives which improve specific characteristics of the composition. These functional additives may include, *e.g.* thickeners to improve the aerial drop and fuel coverage characteristics, corrosion inhibitors to reduce the corrosiveness of the compositions to metal components of storage and application equipment, coloring agents to improve the accuracy and coverage of successive aerial applications, stabilizing agents to prevent separation of the various components of the composition during storage and transport, and spoilage inhibitors to prevent microbial decomposition of certain components, etc.

Substantial amounts of fire retardants are stored in the "ready-to-use" mixed state at tanker aircraft bases. Because of uncertainties of weather and other conditions, an aerial tanker base may not consume all mixed retardant stored. Therefore, it is necessary to inhibit the corrosiveness of mixed products to the mild steel from which the storage tanks are typically fabricated.

Numerous, state of the art, fire retardant compositions have been proposed including , for example, U.S. Published application 20030047723 A1, U.S, 4,971,728, U.S.4,447,336, U.S. 4,272,414 and, U.S. 6,447,697. In one example of the prior art, a mixture of dry powdered guar and a fire retarding salt such as dry powdered mono-ammonium phosphate has been proposed. However, the prior art teaches the provision of guar only as a thickening agent in such a small proportion, approximately 2%-5% by weight, that no significant intumescent qualities are present.

Accordingly, one object of the present invention is to provide a dry powdered fire retardant composition for mixing with water on-site in which the proportion of guar or other organic substance normally used as a thickening agent is sufficent to provide additional significant fire retardant properties.

Another object is to provide a fire retardant composition that is simple and inexpensive to manufacture and, preferably simple to use.

Briefly stated, yet another object of the present invention is to provide a dry powdered fire retardant composition for mixing with water on-site. The composition includes dry powdered guar and a dry powdered fire retardant salt. The proportion of guar exceeds 5% by an amount which is sufficient to provide significant intumescent qualities. The dry powdered guar is extremely hygroscopic facilitating mixing on-site. The dry powdered fire retardant salt is preferably dry powdered mono-ammonium phosphate but may be any other dry powdered fire retardant salt such as di-ammonium phosphate or possibly other commonly used fire retardant salt.

The dry powdered guar is preferably in the range of approximately 40% to approximately 90% by weight so as to allow sufficient ambient rehydration of the dry powdered fire retardant composition once dried on foliage and so as to allow hydration of the foliage to prevent damage thereto while enhancing the foliage's natural fire inhibiting properties. It also permits a lower concentration of fire retardant salt to be used eliminating 'salt burn' damage to the foliage.

With the dry powdered guar being in the range of approximately 40% to approximately 90% by weight, the remaining balance of the dry powdered fire retardant is approximately 60% to approximately 10%. Such a range minimizes damage to the foliage that would otherwise be caused if the dry powdered fire retardant was higher than 60%.

It will be appreciated that the fire retardant composition may consist (only) of the guar and fire retardant dry salt or consist essentially of the guar and fire retardant dry salt. In both cases incidental impurities may be present in the composition while, in the latter case, the composition may include other functionally insignificant ingredients such as, for example, preservatives, for example, antifungal or anti bacterial agents.

The elevated amounts of guar create a residual intumescent, fire-resisting, barrier layer or coating of non-combustible material after all combustible gases are exhausted, providing an unexpected enhancement of fire retarding capability.

A specific embodiment of the invention will now be described by way of example only.

The dry powdered fire retardant composition for mixing with water on-site comprises;
2. Dry powdered guar.
3. A dry powdered fire retardant mono-ammonium phosphate

The dry powdered guar is extremely hygroscopic for mixing on-site and reducing storage requirements.

Typical dry powdered guar is sold by TIC GUMS of 4609 Richlynn Drive, P.O. Box 369, Belcamp, MD. 21017 USA,

The dry powdered guar is in the range of approximately 40% to approximately 90% by weight so as to allow sufficient ambient rehydration of the dry powdered fire retardant composition once dried on foliage the mixture can rehydrate so as to allow hydration of the foliage to prevent damage thereto while enhancing the foliage's natural fire inhibiting properties.

As the dry powdered guar is in the range of approximately 40% to approximately 90% by weight, the balance of dry powdered fire retardant is approximately 10% to approximately 60%. Such a range minimizes damage to the foliage that would otherwise be caused if the dry powdered fire retardant were higher than 60%.

## Claims

1. A dry powdered fire retardant composition comprising dry powdered guar and a dry powdered fire retardant salt for mixing with water on-site, wherein the proportion of guar is greater than 5% by weight by an amount sufficiently high to form a residual, intumescent, significantly fire resistant layer after all combustible gases are exhausted by the fire.

2. The composition according to claim 1, wherein said fire retardant salt is mono-ammonium phosphate.

3. The composition according to claim 1 or claim 2, wherein said dry powdered guar is in the range of approximately 40% to approximately 90% by weight so as to allow sufficient ambient rehydration of said dry powdered fire retardant composition once dried on foliage and so as to allow hydration of foliage to prevent damage thereto while enhancing the foliage's natural fire inhibiting properties; and the range of said dry powdered fire retardant is approximately 10% to approximately 60%, with such range minimizing damage to the foliage that would otherwise be caused if said dry powdered fire retardant were higher than 60%.

4. A dry powdered fire retardant composition for mixing with water on-site, consisting essentially of dry powdered guar and a dry powdered fire retardant salt, wherein the proportion of guar is greater than 5% by weight.

5. The composition according to claim 4, wherein said fire retardant salt is mono-ammonium phosphate.

6. The composition according to claim 4 or claim 5, wherein said dry powdered guar is in the range of approximately 40% to approximately 90% by weight so that the range of said dry powdered fire retardant is approximately 10% to approximately 60%, by weight.

7. A dry powdered fire retardant composition for mixing with water on-site, comprising a dry powdered guar and a dry powdered fire retardant salt, wherein the proportion of dry powdered is in the range of approximately 40% to approximately 90% by weight so that the range of said dry powdered fire retardant is approximately 10% to approximately 60%, by weight.

8. A dry powdered fire retardant composition for mixing with water on-site comprising a dry powdered fire retardant salt and a dry powdered organic thickening agent wherein the proportion of the thickening agent is sufficiently high to provide additional significant fire retardant properties
